# EUROPEAN PATENT SPECIFICATION

(11) **EP 0 678 185 B1**
(45) Date of publication and mention of the grant of the patent: **30.09.1998**
(21) Application number: 94904148.7
(22) Date of filing: 03.01.1994
(51) Int. Cl.: F24F 13/14, A01K 1/00

(54) **VENTILATING APPARATUS, ESPECIALLY FOR ANIMAL STABLES**
BELÜFTUNGSVORRICHTUNG, INSBESONDERE FÜR VIEHSTÄLLE
APPAREIL DE VENTILATION NOTAMMENT POUR ECURIES

(30) Priority: 28.12.1992 DK 156292
(43) Date of publication of application: 25.10.1995
(73) Proprietor: SKOV A/S, DK-7870 Glyngore (DK)
(72) Inventor: VENG, Niels, Skov, DK-7870 Glyngoere (DK)
(74) Representative: Skoett-Jensen, Knud
(86) International application number: DK9400002
(87) International publication number: WO9415156

(56) References cited:
- DE-A- 1 753 262
- DK-C- 150 399

## Description

The present invention relates to a ventilation system, particularly for stables, of the type disclosed in the Danish Patent Specification No. 150,399, i.e. a system comprising a number of air intake valves that are openable and closable in a differentiated manner. In the said specification there is distinguished between valves which, when regulated towards an open position, open relatively slowly, and other valves which during the same course initiate their opening with a certain delay, but will then be opened that much faster, such that both groups of valves will be fully open at the end of the regulation interval. It is obtained thereby that with the use of a simple control mechanism it is possible to produce an initial opening with a desirably limited opening area for achieving a high air velocity, while for an increasing need of ventilation it is possible to open for a considerably larger intake area.

This "two-step-system", however, exhibits certain drawbacks, primarily that it can be difficult or expensive to arrange for a sensor equipment that will react suitably rapidly on changed operational conditions for a correct adjustment thereto. If a need for increased ventilation is detected in the regulation range where the extra valves are influenced to initial opening, this will easily result in these valves being opened more than required, as it will take some time before the effect of the change can be detected, and in the meantime the change may cause unsuitable effects.

The present invention aims at achieving such an equalization of the regulation course, by which there will be no marked adjustment jumps giving rise to the said control problems.

Such an equalization, of course, may well be obtained with the use of an e.g. electronically controlled opening of the extra valves, but it is another purpose of the invention to provide for a very simple control system, viz. as simple as in the said known system.

These aims are achieved by a ventilation system according to claim 1.

On that background, also the present invention makes use of a plurality of single valves adapted so as to open in a differentiated manner, but instead of operating with only two different control types there is used at least three different types, viz. such that in an initial phase of an opening cycle only a first group of the valves will be opened, while later on an opening of another group of valves is initiated and still later of the remaining third group of valves. It will be possible to operate correspondingly with four or even more groups of valves to be successively actuated, but experiments have shown that already the said triple system provides for such a marked improvement of the total control of the system that this solution will be sufficient in many instances.

It should be mentioned that it is a particular aspect of the invention that the control mechanisms may be adapted in such a manner that it is easily possible to adjust the moment at which, during the course of the regulation, each of the valves changes to another drive transmission ratio. Thereby the invention can be important even for systems working in only two steps, as it will no longer be a condition that the relevant change is effected exactly at half the full opening.

It should be mentioned already here that the invention also provides for the additional function that the valves in the various groups, once brought to their fully open position approximately at the same time, yet are collectively openable still further, now without any substantial differentiation. The reason for this is the recognition that normally it will be sufficient to adapt the control system to effect a real regulation during the majority of the hours and days of the year, while at the remaining days, viz. extremely hot days, there will be no real need for any regulation, but only for a very strong ventilation. For this reason it is desirable that the otherwise fully opened valves can be opened still more and as much as possible during short periods, without this range calling for any sensitive control. This in itself, according to the invention, leads to a proposal of providing valve units that are larger than the normal units used so far.

For the invention it is significant that it has been found possible to make use of the same extremely simple control system as disclosed in the aforementioned patent specification. In that system there is used a drawbar mounted along a row of the relevant valves, this bar being reciprocable from a driving station, which, via a computer, is controlled by the sensor equipment of the system. Via local wire connections and wire pulleys the drawbar is connected to respective pull eyes on the valve plates of the different valves in such a manner that the valve plates can be swung up and down all according to the displacement of the drawbar. An opening of the valves is initiated by the valve plates being swung down from an upper closed position, and by a direct wire coupling between the drawbar and the valve plates there is, in principle, established a transmission ratio of 1:1. According to the said patent, as far as one partial group of valves is concerned, the transmission is established with the ratio 1:0.5 through a pulley block system, such that these valves during the entire course of regulation are adjusted by the half of the movement of the drawbar, while the remaining valves are well operated with the transmission ratio 1:1, but initially not until the valves in the first group have reached half their full opening. This result is produced in a simple manner in that the wire connections between the drawbar and the valve plates in the second group of valves have such an overlength that they will not be operatively tightened until the drawbar has moved through a predetermined distance. Thereafter these valve plates will be opened by the ratio 1:1 with the drawbar movement, while the plates in the first valve group will still be opened by the ratio 1:2 until the valve plates reach the fully open position.

Relative to this, it is important for the present invention that is has been realized that the single valve groups should not necessarily be operated with a transmission ratio of either 1:2 or 1:1 throughout the course of regulation, as it is possible to shift between these ratios anywhere along that course. It is recognized that the ratio 1:2 will involve a free sliding of the wire through the wire eyelet on the valve plate, and that it will be possible in a simple manner to terminate this sliding in any phase of the adjustment movement, viz. by providing a suitably mounted abutment on the wire, such that this abutment or widening cannot pass the eyelet of the valve plate. When this situation arises the eyelet and therewith the entire valve plate will thereafter be drawn towards the drawbar with the transmission ratio 1:1.

Thus, when it can be chosen optionally in which phase there is shifted between the two ratios it is also possible to determine with which delay the opening of the different valves should be initiated, when it is desired that all valves should reach the said preliminary "full opening". In the said known system the valves of the ratio 1:1 should be coupled in when the "1:2-valves" have reached half their opening, resulting in the said two step operation. The delay is established in using between the drawbar and the valve plates a wire which is slack from the beginning, but is tightened just when the opening is to be initiated, and in connection with the invention this arrangement can be used directly. Only the overlength of the wire should be adapted to the relevant individual starting points, which may now be different so as to result in a two, three or plural step operation.

Also the desirable final opening to a full maximum can be achieved by a simple modification of the known system. It will be characteristic that all the valve plates, the opening of which has been initiated with delay, will be coupled to the drawbar with the transmission ratio 1:1 when they are brought to the provisional fully open position, while the first opened valve plates have had the ratio 1:2 all the time. In a way it could be acceptable that the drawbar in its further movement to the full maximum opening would cause a maximum opening of all the former valves, while only the latter ones would be moved further by the half of that movement. However, in this connection it is possible to use the same measure as already mentioned for changing the transmission ratio, viz. using an abutment member on the draw wire of the first opened valve plates, which will then move the last way in full synchronism with the other valve plates in the relevant situations.

In their simplest shape the said abutment members may be a simple knot on the draw wires or a bushing to be screw clamped at any place thereon, but it will be suitable to prepare the wires at the factory in such a manner that they are adapted to receive simple abutment members at different selected places. A solution may be small knots or expanded portions which may, themselves, pass through the draw eyelets, but be suitable for blocking for a stop disc inserted on the wire, such that this disc will then form an abutment against the draw eyelet.

In the following the invention is described in more detail with reference to the drawing, in which:-
Figs. 1 and 2 are perspective views of a group of valves according to the invention, while
Figs. 3 and 4 are cross sectional views thereof, and
Fig. 5 is a plan view of a draw wire belonging to the single valves.

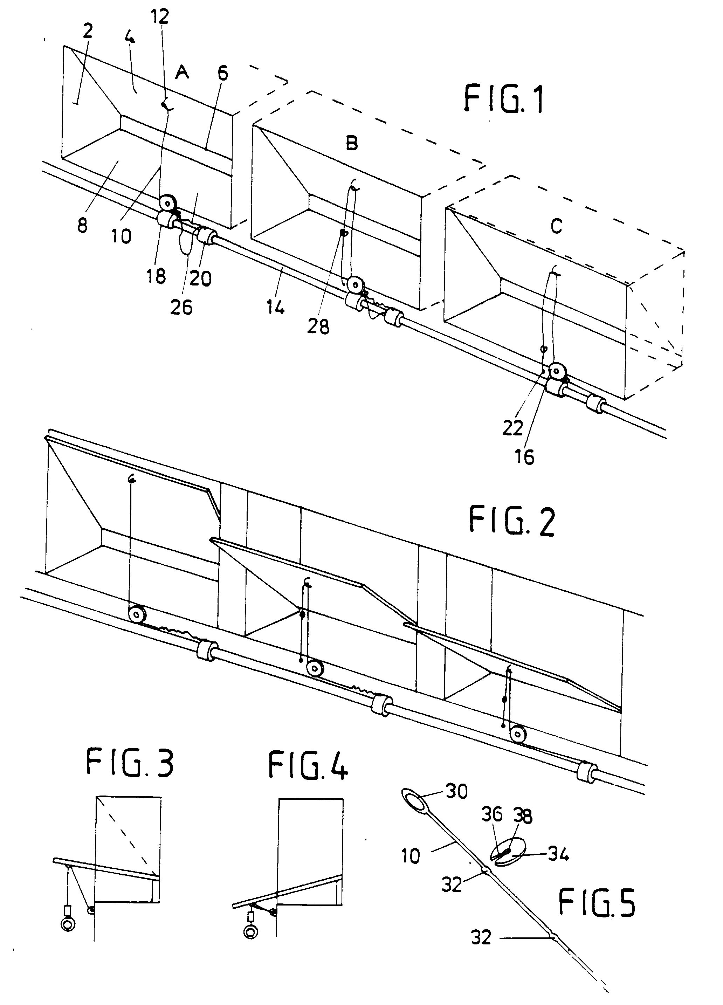

In Fig. 1 is schematically shown three wall mounted valves of the discussed type, denoted A, B and C. Each valve comprises a frame 2, in which is mounted an inclined valve plate 4, which, against spring action, is openable by pivoting about its lower hinge edge 6. The bottom piece of the of the frame 2 is designated 8. the plates 4 can be pulled down by means of wire pieces 10 engaging with a draw eyelet 12 on the plates.

In front of and somewhat beneath the valves there is arranged a drawbar 14 projecting from a non-illustrated control station and coupled to the wire pieces 10 in such a manner that the pivoting down and up of the valve plates 4 can be controlled by the drawbar 14 being displaced one way or the other. The wires are laid about pulleys 16 held to the bottom 8 of the valve frame. At a distance therefrom the wires are fixed to the rod 14 by means of clamps 20. So far described the system is fully conventional, a displacement of the rod 14 to the right resulting in a pivoting down of the valve plates 4, while these will be swung up by the said spring action when the rod 14 is moved to the left.

In the same manner as disclosed in DK-C-150,399 the wire 10 of one valve, C, is taken from the the pulley 16 up through the draw eyelet and therefrom down to a fixed fastening point 22 near the pulley, such that the wire can slide freely through the eyelet 12. Thereby a tackle draw is established with the transfer ratio 2:1 between the movements of the rod 14 and the eyelet 12C, and since the wire projects tightly the plate 4C will initiate its opening as soon as the drawbar 14 is moved to the right, and the plate will open with half the velocity of the drawbar 14.

At another valve, A, the wire 10 is directly fixed to the eyelet 12, and the wire exhibits a certain overlength, though in the lower area it is kept tightened by means of a relatively weak contraction spring 24. As shown, the wire extends through a depending loop 26 between the ends of the spring 24. When the drawbar 14 is operated, what happens initially is that the wire 10 is tightened by the expansion of the spring 24, and when the rod 14 is moved further the associated valve plate 4 will then be swung downwardly with the transmission ratio 1:1. In DK-C-150,399 this is arranged in such a manner that the wire 10A is tightened when the valve C is brought into half opening, such that the valve A is brought from closed to fully open condition concurrently with the valve C being brought from half open to fully open condition. What makes this desirable is described in more detail in the specification of that patent.

In the system according to the example of Figs. 1 and 2 the valves A and C are arranged, in principle, quite as the two different valve types of the known system, but a valve B is added, having a slightly modified drive system. As for the valve C, the wire 10B is arranged as a tackle draw with a fixed point 22, and moreover, as for valve A, there is used a wire having a certain overlength, though here less than for valve A, such that the associated loop 26B is shorter than the loop 26A. Moreover, between the fixed point 22 and the draw eyelet 12 the wire is provided with a knot or another widening 28 which cannot pass through the eyelet 12. Because the loop 26B is shorter than the loop 26A, the valve plate 4B responds to further regulation by initiating its opening with a smaller delay than the plate 4A, i.e. an intermediate opening stage has been added in the total system, such that it is possible to operate therein with the discussed, advantageous three-step operation.

The knot or widening 28 on the wire 10B is placed at a point of the wire defined by the eyelet 12 on the plate 4B reaching this place by such an angular position of the plate 4B at which the plate 4A with transmission ratio 1:1 has reached substantially the same angular position, while the plate 4C has moved further to an angular position midways between this position and the fully open position. When the widening 28B is hit by the draw eyelet 12B the tackle operation will cease, because the wire can no longer slide through the eyelet, and as a result the further opening movement will take place with the transmission ratio 1:1, just as for the further movement of the plate 4A. When the plates 4A and 4B have reached the same angular positions and when the plate 4C has been moved further to the half of the remaining distance to full opening, then all the three valve plates, by the further regulation movement, will end up by reaching the fully open position concurrently.

Fig. 2 shows the situation in which the valve plate 4C has been moved to a little more than half its open position, while the plate 4A has just begun to open and the plate 4B assumes an intermediate position, to which it has been swung down with a certain delay, with the wire widening 28 located shortly in front of the draw eyelet 28B. After a certain further movement the widening 28 will hit the eyelet 12, concurrently with the faster moving plate 4A having come down to the same angular position, whereafter both of these plates will be moved downwardly, almost as a single plate, which will reach the final position concurrently with the more slowly moved plate 4C.

This final position of the valve plates is shown in Fig. 3. According to the invention, however, it may be desirable that the valve plates can be moved further into the said extremely open condition, which is shown in Fig. 4, whereby it is also desirable that all the valve plates participate in this movement. The plates 4A and 4B are directly further movable with the transmission ratio 1:1, while the plates 4C in the system will only be moved half the way, if they still operate with the ratio 2:1. This, as mentioned, may be acceptable, but nevertheless it is a preferred option to use the same measure as for the plate 4B, viz. a change of the transmission ratio from 2:1 to 1:1 at the moment the draw eyelet 12 reaches down to such a widening 28 on the wire 10 which induces the change. In the valve unit C, therefore, this widening 28 is provided relatively close to the fixed point 22C, such that only during the very last phase of the course of opening the plate 4C will be moved with the ratio 1:1, resulting in the valve plates of all three valve types being moved fully synchronously in the range between fully open position and extremely open position .

In Fig. 5 it is indicated that the wire connections 10 may be produced as standard parts with fixture eyelets 30 and with a number of small widenings 32 which may pass unobstructed through the associated draw eyelet 12, but are usable to form an axial support base for a marked widening in the form of a disc 34 laterally inserted on the wire and provided with a radial slot 36 and a narrow central hole 38 enabling such an insertion and fastening. The stop disc 34, then, may be mounted at choice at either one or the other of the widenings 32, depending of the intended use for a valve B or C.

These wire members 10, which may advantageously be made as die-cast units, may well be prepared with many more widenings 32, such that the users themselves may decide which widenings should be used for determining the regulation characteristics of the single valve groups.

Alternatively, the wire may be made of cord as for shoe laces, and the disc is a plate having a countersunk middle hole; the plate is drawn onto the cord and is fixed by clamping with a pair of tongs.

## Claims

1. A ventilation system, particularly for animal stables, of the type comprising a plurality of preferably wall mounted air intake valves (2)and a control unit for graduated opening and closing of these valves depending of the ventilation requirements, said valves comprising valve plates (4), which, by means of a draw wire (10), are operable to be moved towards an open position in response to a central opening draw (14)from the control unit, some of the valve plates (4) being coupled to the central draw with a transmission ratio of 1:1, while other valve plates are correspondingly coupled through a wire tackle with the wire passing slidingly through an eyelet (12) to produce a transmission ratio 1:0.5, characterized in that the tackle couplings of all or preferably only some of the tackle coupled valve plates (4) are adapted such that on the draw wire (10) there is mounted a stop member (28,34), which, during the course of regulation between closed and open position of the valve plate, hits the said eyelet (12) which conditions the tackle ratio 1:0.5, to the effect that the stop member (28,34) will then prevent any further sliding of the wire through the eyelet (12)and therewith cause an operative change of the transmission ratio from 1:0.5 to 1:1.

2. A ventilation system according to claim 1, characterized in that the stop members (28,34) are mounted on such different places of the draw wires (10) that the valves, individually or in groups, change their transmission ratio at mutually different phases of the course of opening.

3. A ventilation system according to claim 1 or 2, characterized in that the draw wires (10) are made with interspaced widenings (32) usable for the backing of stop members in the form af discs (34) with a radial slot (36).

4. A ventilation system according to claim 1, in which the draw connections to the single valves (2) are arranged such that the valve plates (4) initiate their opening movements in different phases of the course of regulation, such that with their different transmission ratios they will reach an operatively open position substantially concurrently, characterized in that the tackle couplings of all the valves (2) are arranged with the said stop members (28,34) placed in such a manner that the valve plates (4) are drawable for further opening with the transmission ratio 1:1 from the said operatively fully open condition to a further maximum open position.

## Patentansprüche

1. Belüftungssystem, insbesondere für Tierstallungen, der Art, die eine Mehrzahl vorzugsweise wandangebrachter Lufteinlaßklappen (2) und eine Steuereinheit zum schrittweisen Öffnen und Schließen dieser Klappen in Abhängigkeit von den Belüftungserfordernissen umfaßt, wobei die Klappen Klappenplatten (4) umfassen, die mittels eines Zugdrahtes (10) betätigbar sind, um in Reaktion auf einen zentralen Öffnungszug (14) von der Steuereinheit zu einer geöffneten Stellung hin bewegt zu werden, wobei einige der Klappenplatten (4) mit einem Übertragungsverhältnis von 1:1 mit dem zentralen Zug verbunden sind, während andere Klappenplatten entsprechend über einen Drahtseilzug verbunden sind, wobei der Draht gleitend durch eine Öse (12) läuft, um ein Übertragungsverhältnis von 1:0,5 zu liefern, dadurch gekennzeichnet, daß die Seilzugverbindungen aller oder vorzugsweise nur einiger der über einen Seilzug verbundenen Klappenplatten (4) so angepaßt sind, daß an dem Zugdraht (10) ein Anschlag-/Stopperelement (28, 34) angebracht ist, das während der Regulierung zwischen der geschlossenen und der offenen Stellung der Klappenplatte die Öse (12) trifft, die das Zugverhältnis von 1:0,5 bedingt, mit der Wirkung, daß das Stopperelement (28, 34) dann jegliches weitere Gleiten des Drahtes durch die Öse (12) verhindert und damit eine operative Veränderung des Übertragungsverhältnisses von 1:0,5 zu 1:1 bewirkt.

2. Belüftungssystem nach Anspruch 1, dadurch gekennzeichnet, daß die Stopperelemente (28, 34) an solch unterschiedlichen Stellen der Zugdrähte (10) angebracht sind, daß die Klappen, einzeln oder in Gruppen, ihr Übertragungsverhältnis zu wechselweise unterschiedlichen Phasen im Verlauf des Öffnens ändern.

3. Belüftungssystem nach Anspruch 1 oder 2, dadurch gekennzeichnet, daß die Zugdrähte (10) mit beabstandeten Weitungen (32) ausgebildet sind, die zur Unterstützung von Stopperelementen in Form von Scheiben (34) mit einem radialen Schlitz (36) verwendbar sind.

4. Belüftungssystem nach Anspruch 1, in dem die Zugverbindungen zu den einzelnen Klappen (2) so angeordnet sind, daß die Klappenplatten (4) ihre Öffnungsbewegung in unterschiedlichen Phasen des Regulationsverlaufes beginnen, so daß sie mit ihren unterschiedlichen Übertragungsverhältnissen eine operative Offenstellung im wesentlichen gleichzeitig erreichen, dadurch gekennzeichnet, daß die Seilzugverbindungen aller Klappen (2) angeordnet sind, wobei die Stopperelemente (28, 34) derart angeordnet, daß die Klappenplatten (4) zum weiteren Öffnen mit dem Übertragungsverhältnis 1:1 von dem operativ vollständig geöffneten Zustand zu einer weiteren Maximum-Offenstellung ziehbar sind.

## Revendications

1. Système de ventilation, particulièrement pour des écuries, du type comprenant une pluralité d'obturateurs (2) d'entrée d'air montés de préférence sur un mur et une unité de commande pour l'ouverture et la fermeture progressive de ces obturateurs selon les exigences de ventilation, lesdits obturateurs comprenant des plaques d'obturateur (4) qui, par l'intermédiaire d'un câble de traction (10), peuvent être actionnées pour être déplacées vers une position ouverte en fonction d'une traction d'ouverture centrale (14) de l'unité de commande, certaines des plaques d'obturateur (4) étant couplées à la traction centrale avec un rapport de transmission de 1:1, tandis que d'autres plaques d'obturateur sont couplées de façon correspondante par l'intermédiaire d'un palan à câble avec le câble traversant de façon glissante un oeillet (12) pour produire un rapport de transmission de 1:0,5,
caractérisé en ce que les couplages du palan de toutes ou de préférence seulement certaines des plaques (4) d'obturateurs couplées au palan sont adaptés de telle sorte que, sur le câble de traction (10), il est monté un organe de butée (28,34), qui, pendant la course de réglage entre les positions fermée et ouverte du plateau d'obturateur, touche ledit oeillet (12), ce qui conditionne le rapport du palan de 1:0,5, dans le but que l'organe de butée (28,34) empêchera alors un quelconque glissement du câble à travers l'oeillet (12) et avec cela entraînera un changement opératoire du rapport de transmission de 1:0,5 à 1:1.

2. Système de ventilation selon la revendication 1,
caractérisé en ce que les organes de butée (28,34) sont montés sur différents emplacements des câbles de traction (10) de sorte que les obturateurs, individuellement ou en groupes, changent leur rapport de transmission à des phases mutuellement différentes de la course d'ouverture.

3. Système de ventilation selon la revendication 1 ou 2,
caractérisé en ce que les câbles de traction (10) sont réalisés avec des élargissements espacés (32) utilisables pour l'appui des éléments de butée sous la forme de disque (34) ayant une fente radiale (36).

4. Système de ventilation selon la revendication 1,
dans lequel les liaisons de traction aux obturateurs individuels (2) sont agencées de telle façon que les plaques (4) d'obturateur commencent leurs mouvements d'ouverture en différentes phases de la course de réglage, de sorte que, avec leurs rapports de transmission différents, elles atteindront une position ouverte de fonctionnement sensiblement en même temps,
caractérisé en ce que les couplages du palan de tous les obturateurs (2) sont agencés avec lesdits organes de butée (28,34) placés de telle manière que les plaques (4) d'obturateur puissent être tirées pour une ouverture suivante avec le rapport de transmission de 1:1 à partir de ladite condition totalement ouverte de fonctionnement vers une autre position ouverte maximale.
